# EUROPEAN PATENT APPLICATION

(11) **EP 2 874 461 A1**
(43) Date of publication of application: **20.05.2015**
(21) Application number: 13872142.8
(22) Date of filing: 18.01.2013
(51) Int. Cl.: H04W 80/02

(54) **DATA TRANSMISSION METHOD AND DEVICE**

(71) Applicant: Huawei Technologies Co., Ltd., Longgang District Shenzhen, Guangdong 518129 (CN)
(72) Inventor: MIAO, Jinhua, Shenzhen Guangdong 518129 (CN); WANG, Yu, Shenzhen Guangdong 518129 (CN); ZHANG, Jian, Shenzhen Guangdong 518129 (CN); ZENG, Qinghai, Shenzhen Guangdong 518129 (CN)
(74) Representative: Maiwald Patentanwalts GmbH
(86) International application number: PCT/CN2013/070672
(87) International publication number: WO 2014/110786

(57) **Abstract**

The present invention relates to a data transmission method and apparatus. The data transmission method includes: acquiring associated count values of received protocol data units PDUs, where the received PDUs are PDUs that a first data link layer receives from N data streams at a second data link layer, and N ≥ 2; determining N candidate count values, where the N candidate count values are in a one-to-one correspondence with the N data streams, and the candidate count value is a maximum value of associated count values of PDUs from each data stream and in the received PDUs; selecting a minimum value from the N candidate count values as a currently submissible count value; and when the associated count values of the received PDUs meet a submitting condition set according to the currently submissible count value, submitting PDUs of which associated count values meet the submitting condition to an upper-layer communication layer of the first data link layer.

## Description

### TECHNICAL FIELD

The present invention relates to the field of communications technologies, and in particular, to a data transmission method and apparatus.

### BACKGROUND

In an existing communications system, a splitting solution (hereinafter referred to as a first splitting solution) in which splitting is performed below a packet data convergence protocol (Packet Data Convergence Protocol, PDCP) layer and above a radio link control (Radio Link Control, RLC) layer, or a splitting solution (hereinafter referred to as a second splitting solution) in which splitting is performed below the RLC layer is used.

The first splitting solution is used as an example. In an existing data transmission method, the PDCP layer receives protocol data units (Protocol Data Unit, PDU) submitted by different data streams at the RLC layer: Received PDUs are sorted in each data stream at the RLC layer and then submitted to the PDCP layer; and the PDCP layer submits the PDUs to an upper-layer communication layer. Only that each data stream at the RLC layer submits PDUs in sequence to the PDCP layer is considered in this data transmission method, so that the PDCP layer determines that temporarily unreceived PDUs due to a transmission delay are lost PDUs.

Similarly, in the second splitting solution, using the existing data transmission method may also cause a similar problem.

### SUMMARY

In view of the foregoing, embodiments of the present invention provide a data transmission method and apparatus, to implement the following: In a splitting scenario, after receiving PDUs submitted by a second data link layer, a first data link layer avoids, by setting a submitting condition, incorrectly determining that temporarily unreceived PDUs are lost.

According to a first aspect, an embodiment of the present invention provides a data transmission method, where the method includes:
acquiring associated count values of received protocol data units PDUs, where the received PDUs are PDUs that a first data link layer receives from N data streams at a second data link layer, and N ≥ 2;
determining N candidate count values, where the N candidate count values are in a one-to-one correspondence with the N data streams, and the candidate count value is a maximum value of associated count values of PDUs from each data stream and in the received PDUs;
selecting a minimum value from the N candidate count values as a currently submissible count value; and
when the associated count values of the received PDUs meet a submitting condition set according to the currently submissible count value, submitting PDUs of which associated count values meet the submitting condition to an upper-layer communication layer of the first data link layer.

In a first possible implementation manner of the first aspect, that when the associated count values of the received PDUs meet a submitting condition set according to the currently submissible count value is specifically: when the associated count values of the received PDUs meet one of the following two conditions: The associated count values of the received PDUs are less than the currently submissible count value, or the associated count values of the received PDUs are consecutive values starting from the currently submissible count value.

With reference to the first aspect or the first possible implementation manner of the first aspect, in a second possible implementation manner, after the submitting PDUs of which associated count values meet the submitting condition to an upper-layer communication layer of the first data link layer, the method further includes: enabling a timer for unreceived PDUs between to-be-submitted PDUs and submitted PDUs; if a maximum value of associated count values of the unreceived PDUs is greater than or equal to a candidate count value of a first data stream after the timer expires, updating the candidate count value of the first data stream to be the maximum value of the associated count values of the unreceived PDUs, and updating the currently submissible count value, where the first data stream is any data stream of the N data streams; and submitting PDUs of which associated count values meet the submitting condition to the upper-layer communication layer of the first data link layer.

With reference to the first aspect or the first possible implementation manner of the first aspect, in a third possible implementation manner, after the submitting PDUs of which associated count values meet the submitting condition to an upper-layer communication layer of the first data link layer, the method further includes: determining a data stream to which unreceived PDUs after the received PDUs belong, where associated count values of the unreceived PDUs and the associated count values of the received PDUs are consecutive; when the unreceived PDUs and the previously received PDUs are in a same data stream, determining whether the associated count values of the received PDUs previous to the unreceived PDUs are consecutive values starting from the currently submissible count value, and determining whether the associated count values of the unreceived PDUs are less than a candidate count value of the data stream to which the unreceived PDUs belong; and if the associated count values of the received PDUs previous to the unreceived PDUs are consecutive values starting from the currently submissible count value, and the associated count values of the unreceived PDUs are less than the candidate count value of the data stream to which the unreceived PDUs belong, determining that the unreceived PDUs are lost.

With reference to the third possible implementation manner of the first aspect, in a fourth possible implementation manner, before the acquiring associated count values of received protocol data units PDUs, the method further includes: receiving a splitting state report sent by a transmit end, where the splitting state report includes a splitting rule; and the determining a data stream to which unreceived PDUs after the received PDUs belong, where associated count values of the unreceived PDUs and the associated count values of the received PDUs are consecutive is specifically: according to the splitting rule, determining the data stream to which the unreceived PDUs after the received PDUs belong, where the associated count values of the unreceived PDUs and the associated count values of the received PDUs are consecutive.

With reference to the third possible implementation manner of the first aspect, in a fifth possible implementation manner, the PDUs carry indication identifiers, where the indication identifiers are used to indicate the number of PDUs that are in a same data stream as currently received PDUs and are consecutively received after the currently received PDUs; and the determining a data stream to which unreceived PDUs after the received PDUs belong, where associated count values of the unreceived PDUs and the associated count values of the received PDUs are consecutive is specifically: according to the indication identifiers carried by the received PDUs, determining the data stream to which the unreceived PDUs after the received PDUs belong, where the associated count values of the unreceived PDUs and the associated count values of the received PDUs are consecutive.

According to a second aspect, an embodiment of the present invention provides a data transmission apparatus, where the apparatus includes:
an acquiring unit, configured to acquire associated count values of received protocol data units PDUs, where the received PDUs are PDUs that a first data link layer receives from N data streams at a second data link layer, and N ≥ 2;
a selecting unit, configured to determine N candidate count values, where the N candidate count values are in a one-to-one correspondence with the N data streams, and the candidate count value is a maximum value of associated count values of PDUs from each data stream and in the received PDUs; and select a minimum value from the N candidate count values as a currently submissible count value; and
a submitting unit, configured to: when the associated count values of the received PDUs meet a submitting condition set according to the currently submissible count value, submit PDUs of which associated count values meet the submitting condition to an upper-layer communication layer of the first data link layer.

In a first possible implementation manner of the second aspect, that when the associated count values of the received PDUs meet a submitting condition set according to the currently submissible count value is specifically: when the associated count values of the received PDUs meet one of the following two conditions: The associated count values of the received PDUs are less than the currently submissible count value, or the associated count values of the received PDUs are consecutive values starting from the currently submissible count value.

With reference to the second aspect or the first possible implementation manner of the second aspect, in a second possible implementation manner, the apparatus further includes: a timing unit, configured to enable a timer for unreceived PDUs between to-be-submitted PDUs and submitted PDUs; and an updating unit, configured to: if a maximum value of associated count values of the unreceived PDUs is greater than or equal to a candidate count value of a first data stream after the timer 4 expires, update the candidate count value of the first data stream to be the maximum value of the associated count values of the unreceived PDUs, and update the currently submissible count value, where the first data stream is any data stream of the N data streams; the submitting unit is further configured to submitting PDUs of which associated count values meet the submitting condition to the upper-layer communication layer of the first data link layer.

With reference to the second aspect or the first possible implementation manner of the second aspect, in a third possible implementation manner, the apparatus further includes: a first determining unit, configured to determine a data stream to which unreceived PDUs after the received PDUs belong, where associated count values of the unreceived PDUs and the associated count values of the received PDUs are consecutive; a determining unit, configured to: when the unreceived PDUs and the previously received PDUs are in a same data stream, determine whether the associated count values of the received PDUs previous to the unreceived PDUs are consecutive values starting from the currently submissible count value, and determine whether the associated count values of the unreceived PDUs are less than a candidate count value of the data stream to which the unreceived PDUs belong; and a second determining unit, configured to: if the associated count values of the received PDUs previous to the unreceived PDUs are consecutive values starting from the currently submissible count value, and the associated count values of the unreceived PDUs are less than the candidate count value of the data stream to which the unreceived PDUs belong, determine that the unreceived PDUs are lost.

With reference to the third possible implementation manner of the second aspect, in a fourth possible implementation manner, the apparatus further includes: a receiving unit, configured to receive a splitting state report sent by a transmit end, where the splitting state report includes a splitting rule; the first determining unit is specifically configured to: according to the splitting rule, determine the data stream to which the unreceived PDUs after the received PDUs belong, where the associated count values of the unreceived PDUs and the associated count values of the received PDUs are consecutive.

With reference to the third possible implementation manner of the second aspect, in a fifth possible implementation manner, the PDUs carry indication identifiers, where the indication identifiers are used to indicate the number of PDUs that are in a same data stream as currently received PDUs and are consecutively c received after the currently received PDUs; the first determining unit is specifically configured to: according to the indication identifiers carried by the received PDUs, determine the data stream to which the unreceived PDUs after the received PDUs belong, where the associated count values of the unreceived PDUs and the associated count values of the received PDUs are consecutive.

According to a third aspect, an embodiment of the present invention provides a data transmission apparatus, where the apparatus includes:
a processor; and
a memory, where
the memory is configured to store program code, and the processor is configured to invoke the program code in the memory, to perform the following operations:
   acquiring associated count values of received protocol data units PDUs, where the received PDUs are PDUs that a first data link layer receives from N data streams at a second data link layer, and N ≥ 2;
   determining N candidate count values, where the N candidate count values are in a one-to-one correspondence with the N data streams, and the candidate count value is a maximum value of associated count values of PDUs from each data stream and in the received PDUs;
   selecting a minimum value from the N candidate count values as a currently submissible count value; and
   when the associated count values of the received PDUs meet a submitting condition set according to the currently submissible count value, submitting PDUs of which associated count values meet the submitting condition to an upper-layer communication layer of the first data link layer.

In a first possible implementation manner of the third aspect, that when the associated count values of the received PDUs meet a submitting condition set according to the currently submissible count value is specifically: when the associated count values of the received PDUs meet one of the following two conditions: The associated count values of the received PDUs are less than the currently submissible count value, or the associated count values of the received PDUs are consecutive values starting from the currently submissible count value.

With reference to the third aspect or the first possible implementation manner of the third aspect, in a second possible implementation manner, the processor invokes the program code in the memory, to further perform the following operations: enabling a timer for unreceived PDUs between to-be-submitted PDUs and submitted PDUs; if a maximum value of associated count values of the unreceived PDUs is greater than or equal to a candidate count value of a first data stream after the timer expires, updating the candidate count value of the first data stream to be the maximum value of the associated count values of the unreceived PDUs, and updating the currently submissible count value, where the first data stream is any data stream of the N data streams; and submitting PDUs of which associated count values meet the submitting condition to the upper-layer communication layer of the first data link layer.

With reference to the third aspect or the first possible implementation manner of the third aspect, in a third possible implementation manner, the processor invokes the program code in the memory, to further perform the following operations: determining a data stream to which unreceived PDUs after the received PDUs belong, where associated count values of the unreceived PDUs and the associated count values of the received PDUs are consecutive; when the unreceived PDUs and the previously received PDUs are in a same data stream, determining whether the associated count values of the received PDUs previous to the unreceived PDUs are consecutive values starting from the currently submissible count value, and determining whether the associated count values of the unreceived PDUs are less than a candidate count value of the data stream to which the unreceived PDUs belong; and if the associated count values of the received PDUs previous to the unreceived PDUs are consecutive values starting from the currently submissible count value, and the associated count values of the unreceived PDUs are less than the candidate count value of the data stream to which the unreceived PDUs belong, determining that the unreceived PDUs are lost.

With reference to the third possible implementation manner of the third aspect, in a fourth possible implementation manner, the processor invokes the program code in the memory, to further perform the following operations: receiving a splitting state report sent by a transmit end, where the splitting state report includes a splitting rule; and the determining a data stream to which unreceived PDUs after the received PDUs belong, where associated count values of the unreceived PDUs and the associated count values of the received PDUs are consecutive is specifically: according to the splitting rule, determining the data stream to which the unreceived PDUs after the received PDUs belong, where the associated count values of the unreceived PDUs and the associated count values of the received PDUs are consecutive.

With reference to the third possible implementation manner of the third aspect, in a fifth possible implementation manner, the PDUs carry indication identifiers, where the indication identifiers are used to indicate the number of PDUs that are in a same data stream as currently received PDUs and are consecutively received after the currently received PDUs; and the determining a data stream to which unreceived PDUs after the received PDUs belong, where associated count values of the unreceived PDUs and the associated count values of the received PDUs are consecutive is specifically: according to the indication identifiers carried by the received PDUs, determining the data stream to which the unreceived PDUs after the received PDUs belong, where the associated count values of the unreceived PDUs and the associated count values of the received PDUs are consecutive.

According to the foregoing solutions, PDUs that meet a submitting condition and are in PDUs that the first data link layer receives from each data stream at a second data link layer are submitted to an upper-layer communication layer of a first data link layer in ascending order of associated count values of the PDUs. However, PDUs that do not meet the submitting condition and are in the received PDUs are not submitted, which indicates that there may be unreceived PDUs due to a transmission delay previously, so that waiting is required until the PDUs meet the submitting condition, to avoid incorrectly determining that the unreceived PDUs due to a transmission delay are lost. Therefore, in the foregoing solutions, when receiving PDUs from each data stream at the second data link layer and then submitting the PDUs to the upper-layer communication layer of the first data link layer, the first data link layer can avoid incorrectly determining temporarily unreceived PDUs as lost PDUs.

### BRIEF DESCRIPTION OF DRAWINGS

FIG. 1 is a flowchart of a data transmission method according to Embodiment 1 of the present invention;
FIG. 2 is a first schematic diagram of sorting of PDUs at a PDCP layer according to Embodiment 1 of the present invention;
FIG. 3 is a second schematic diagram of sorting of PDUs at a PDCP layer according to Embodiment 1 of the present invention;
FIG. 4 is a third schematic diagram of sorting of PDUs at a PDCP layer according to Embodiment 1 of the present invention;
FIG. 5 is a flowchart of a data transmission method after a timer is added according to Embodiment 1 of the present invention;
FIG. 6 is a flowchart of a data transmission method after a timer expires according to Embodiment 1 of the present invention;
FIG. 7 is a schematic diagram of sorting of PDUs at a PDCP layer after a timer is added according to Embodiment 1 of the present invention;
FIG. 8 is a schematic diagram of sorting of PDUs that carry indication identifiers at a PDCP layer according to Embodiment 1 of the present invention;
FIG. 9 is a flowchart of a data transmission method according to Embodiment 2 of the present invention;
FIG. 10 is a schematic structural diagram of a data transmission apparatus according to Embodiment 3 of the present invention;
FIG. 11 is a schematic structural diagram of a data transmission apparatus according to Embodiment 4 of the present invention;
FIG. 12 is a schematic structural diagram of a data transmission apparatus according to Embodiment 5 of the present invention; and
FIG. 13 is a schematic structural diagram of a data transmission apparatus according to Embodiment 6 of the present invention.

### DESCRIPTION OF EMBODIMENTS

To make the objectives, technical solutions, and advantages of the present invention clearer, the following further describes the present invention in detail with reference to the accompanying drawings. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

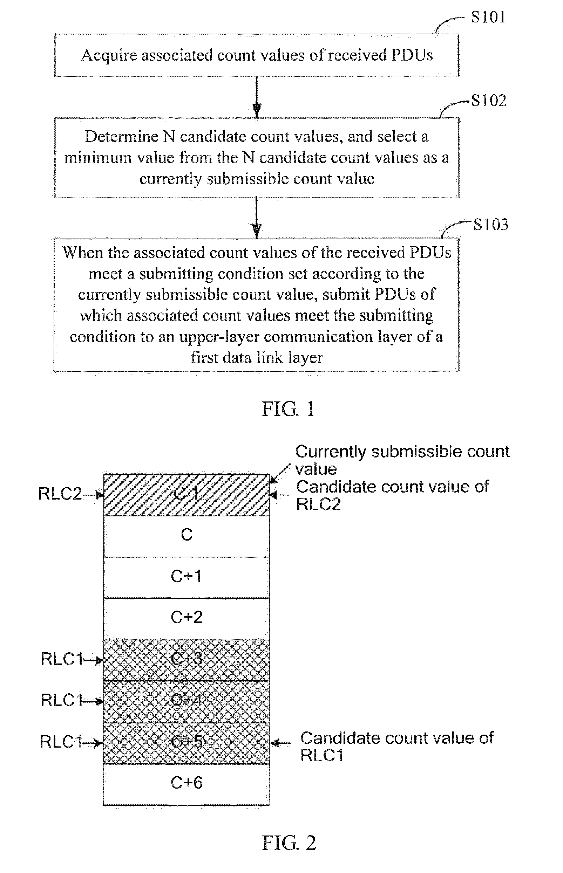

FIG. 1 is used as an example in the following to describe in detail a data transmission method provided in Embodiment 1 of the present invention, and FIG. 1 is a flowchart of a data transmission method according to Embodiment 1 of the present invention. The data transmission method is executed by a user equipment or a base station (which are collectively referred to as a receive end hereinafter).

As shown in FIG. 1, the data transmission method includes the following steps:
Step S101: Acquire associated count values of received PDUs.

The received PDUs are PDUs that a first data link layer receives from N data streams at a second data link layer, and N ≥ 2.

An example that the first data link layer is a PDCP layer and the second data link layer is an RLC layer is used for description. Within a period of time, the PDCP layer receives multiple PDUs from the RLC layer and waits to submit the PDUs to an upper-layer communication layer of the PDCP layer. These received PDUs (not submitted to the upper-layer communication layer of the PDCP layer yet) are from multiple different data streams. After the PDCP layer receives PDUs submitted by each data stream at the RLC layer, where each PDU carries a sequence number (Sequence Number, SN), the receive end determines a hyper frame number (Hyper Frame Number, HFN) according to the SN. SNs carried by PDUs in different windows may be the same, but HFNs of PDUs in different windows are different. SNs carried by PDUs in a same window are not the same, but HFNs of PDUs in a same window are the same. Therefore, according to SNs carried by the received PDUs and HFNs determined according to the SNs, the receive end may acquire the associated count values of the PDUs. At the PDCP layer, the PDUs are sorted according to the associated count values.

Step S102: Determine N candidate count values, and select a minimum value from the N candidate count values as a currently submissible count value.

The N candidate count values are in a one-to-one correspondence with the N data streams, and each candidate count value is a maximum value of associated count values of PDUs from each data stream and in the received PDUs.

Specifically, if the received PDUs include PDUs received from a data stream, a candidate count value of the data stream needs to be updated to be a maximum value of associated count values of the PDUs currently received from the data stream. If the received PDUs do not include PDUs received from a data stream, a candidate count value of the data stream does not need to be updated, and in this case, the candidate count value of the data stream is still a candidate count value of the data stream when the received PDUs at the PDCP layer do not change. Then, a minimum value is selected from these determined candidate count values as the currently submissible count value, to set a submitting condition by using the currently submissible count value.

Step S103: When the associated count values of the received PDUs meet a submitting condition set according to the currently submissible count value, submit PDUs of which associated count values meet the submitting condition to an upper-layer communication layer of the first data link layer.

When the associated count values of the received PDUs meet one of the following two conditions, the PDUs corresponding to the associated count values may be submitted to the upper-layer communication layer of the PDCP layer. The first condition is that the associated count values of the received PDUs are less than the currently submissible count value, and the second condition is that the associated count values of the received PDUs are consecutive values starting from the currently submissible count value (the currently submissible count value is included).

When the associated count values of the received PDUs meet the first condition or the second condition, it indicates that unreceived PDUs previous to the received PDUs are caused by a loss. The received PDUs do not need to wait; and the received PDUs are decapsulated, and then are submitted in an SDU form to the upper-layer communication layer of the PDCP layer in ascending order of the associated count values of the PDUs. The communication layer may be a data link layer or a network protocol layer. When the associated count values of the received PDUs meet neither of the foregoing two conditions, it indicates that the unreceived PDUs previous to the received PDUs may be caused by a transmission delay. The received PDUs cannot be submitted immediately and need to wait until the submitting condition is met, to avoid incorrectly determining that temporarily unreceived PDUs due to a transmission delay are lost and not waiting for the unreceived PDUs.

After receiving PDUs from multiple data streams at the second data link layer and by using the foregoing data transmission method, the first data link layer can avoid incorrectly determining temporarily unreceived PDUs as lost PDUs when submitting PDUs to the upper-layer communication layer.

Specifically, FIG. 2 is a first schematic diagram of sorting of PDUs at a PDCP layer according to Embodiment 1 of the present invention, where white boxes represent unreceived PDUs at a current moment; grid boxes represent received PDUs at the current moment; and slash boxes represent PDUs submitted to an upper-layer communication layer at the current moment. As shown in FIG. 2, at the current moment, a maximum value of associated count values of PDUs received from an RLC1 data stream is C+5, so that a candidate count value of the RLC1 data stream is updated to be C+5. The received PDUs do not include PDUs received from an RLC2 data stream, so that a candidate count value of the RLC2 data stream does not need to be updated and is still a previous candidate count value, that is, C-1. Then, a minimum value of candidate count values at the current moment is selected as a currently submissible count value, that is, C-1. Therefore, at the current moment, C+3, C+4, and C+5 meet neither the first condition nor the second condition, so that PDUs of which associated count values are C+3, C+4, and C+5 need to wait to be submitted to the upper-layer communication layer of the PDCP layer in ascending order of the associated count values until C+3, C+4, and C+5 meet the submitting condition. In this case, unreceived PDUs of which associated count values are C, C+1, and C+2 may be temporarily unreceived due to a transmission delay. Therefore, the PDUs of which the associated count values are C+3, C+4, and C+5 need to wait until the submitting condition is met, to ensure that the temporarily unreceived PDUs are not incorrectly determined as lost PDUs.

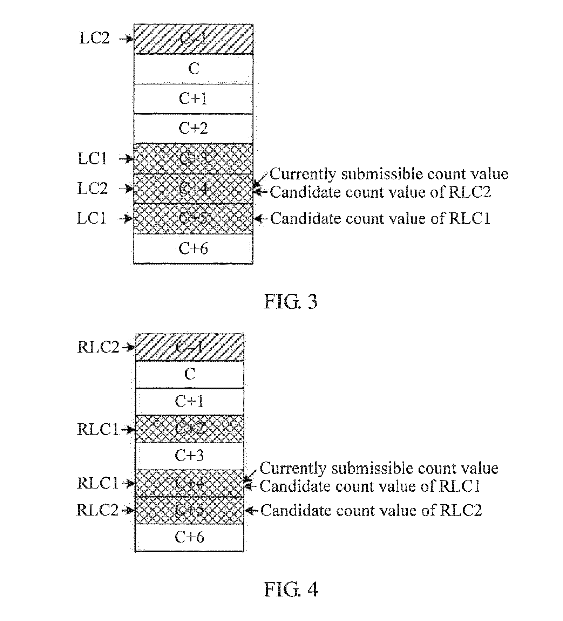

FIG. 3 is a second schematic diagram of sorting of PDUs at a PDCP layer according to Embodiment 1 of the present invention, where white boxes represent unreceived PDUs at a current moment; grid boxes represent received PDUs at the current moment; and slash boxes represent PDUs submitted to an upper-layer communication layer at the current moment. As shown in FIG. 3, at the current moment, a maximum value of associated count values of PDUs received from an RLC1 data stream is C+5, so that a candidate count value of the RLC1 data stream is updated to be C+5. A maximum value of associated count values of PDUs received from an RLC2 data stream is C+4, so that a candidate count value of the RLC2 data stream is updated to be C+4. Therefore, a currently submissible count value is the smaller value of C+5 and C+4, that is, C+4. In this case, C+3 meets the first condition, so that it may be determined that PDUs of which associated count values are C, C+1, and C+2 are lost. Therefore, a PDU of which an associated count value is C+3 may be submitted to the upper-layer communication layer of the PDCP layer in ascending order of the associated count value. In addition, C+4 and C+5 meet the second condition, and therefore PDUs of which associated count values are C+4 and C+5 are submitted to the upper-layer communication layer of the PDCP layer in ascending order of the associated count values. In this case, it is already determined that the PDUs of which the associated count values are C, C+1, and C+2 are lost.

FIG. 4 is a third schematic diagram of sorting of PDUs at a PDCP layer according to Embodiment 1 of the present invention, where white boxes represent unreceived PDUs at a current moment; grid boxes represent received PDUs at the current moment; and slash boxes represent PDUs submitted to an upper-layer communication layer at the current moment. As shown in FIG. 4, at the current moment, a maximum value of associated count values of PDUs received from an RLC1 data stream is C+4, so that a candidate count value of the RLC1 data stream is updated to be C+4. A maximum value of associated count values of PDUs received from an RLC2 data stream is C+5, so that a candidate count value of the RLC2 data stream is updated to be C+5. Therefore, a currently submissible count value is the smaller value of C+5 and C+4, that is, C+4. In this case, C+2 meets the first condition, and therefore a PDU of which an associated count value is C+2 may be submitted to the upper-layer communication layer of the PDCP layer in ascending order of the associated count value. In addition, C+4 and C+5 meet the second condition, and therefore PDUs of which associated count values are C+4 and C+5 do not need to wait and are submitted to the upper-layer communication layer of the PDCP layer in ascending order of the associated count values. In this case, it is already determined that PDUs of which associated count values are C, C+1, and C+3 are lost.

Preferably, to accelerate submission at the PDCP layer and to accelerate determining whether the unreceived PDUs at the PDCP layer are lost due to a transmission delay, a timer may be added to process an operation. In this case, the timer performs timing for unreceived PDUs between to-be-submitted PDUs and submitted PDUs.

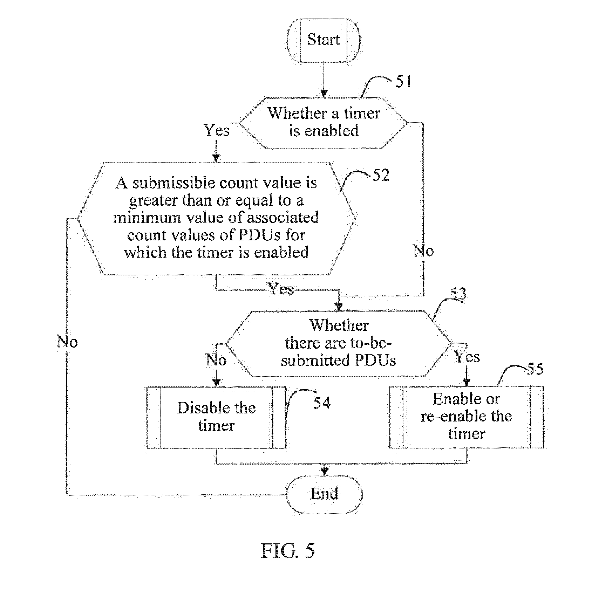

If the timer is enabled after steps S101 to S103 are performed, a specific operating process is shown in FIG. 5. Step 51: Determine whether the timer is enabled. If the timer is not enabled, step 53 is performed to determine whether there are to-be-submitted PDUs. If there are to-be-submitted PDUs, step 55 is performed to enable the timer. If the timer is enabled, step 52 is performed to determine whether a submissible count value is greater than or equal to a minimum value of associated count values of unreceived PDUs (PDUs for which the timer is enabled). If the submissible count value is greater than or equal to the minimum value of the associated count values of PDUs for which timing is performed, step 53 is performed to determine whether there are to-be-submitted PDUs. If there are to-be-submitted PDUs, step 55 is performed to re-enable the timer. If there is no to-be-submitted PDU, step 54 is performed to disable the timer. In another case, the timer continues to perform timing.

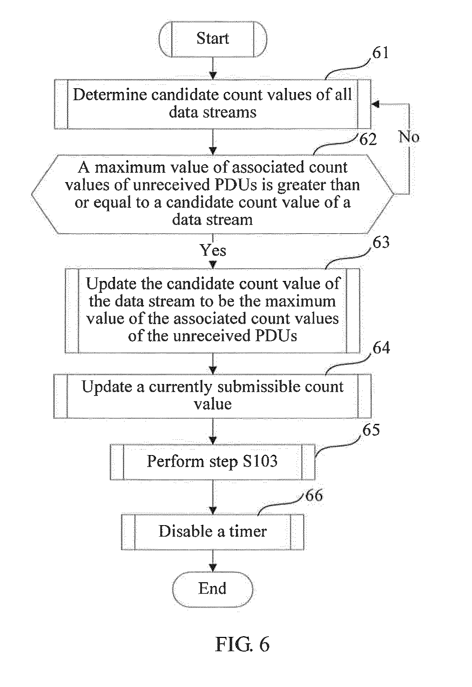

After the timer expires, still no PDU is received. A specific process to accelerate the submission at the PDCP layer is shown in FIG. 6. Step 61: Determine candidate count values of all data streams. Step 62: Determine whether a maximum value of associated count values of unreceived PDUs (PDUs for which the timer is enabled) is greater than or equal to a candidate count value of any of the multiple data streams. If the maximum value of the associated count values of the unreceived PDUs (the PDUs for which the timer is enabled) is greater than or equal to a candidate count value of any of the multiple data streams, step 63 is performed to update the candidate count value of the data stream to be the maximum value of the associated count values of the unreceived PDUs (the PDUs for which the timer is enabled). Then, step 64 is performed to update the currently submissible count value. Afterward, step 65 is performed, where step 65 is the same as step S103. Finally, step 66 is performed to disable the timer. By accelerating updating of the currently submissible count value, waiting time of PDUs that do not meet the current submitting condition is reduced.

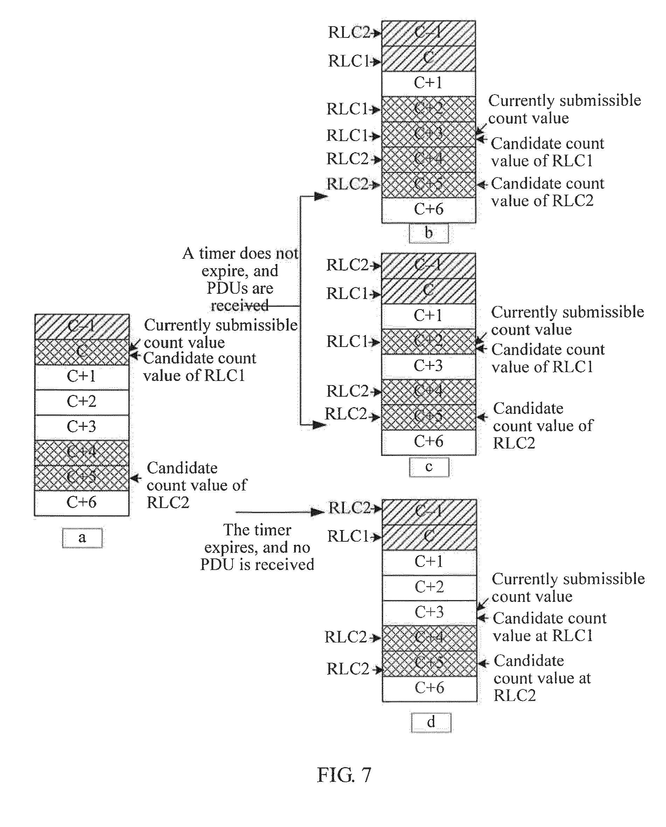

FIG. 7 is a schematic diagram of sorting of PDUs at a PDCP layer after a timer is added according to Embodiment 1 of the present invention, where white boxes represent unreceived PDUs at a current moment; grid boxes represent received PDUs at the current moment; and slash boxes represent PDUs submitted to an upper-layer communication layer at the current moment. In the case shown in FIG. 7a, a candidate count value of an RLC1 data stream is C, and a candidate count value of an RLC2 data stream is C+5, so that it may be determined that a currently submissible count value is C. Therefore, a PDU of which an associated count value is C meets the second condition, and the PDU of which the associated count value is C is submitted to the upper-layer communication layer. However, C+4 and C+5 do not meet any condition, and therefore PDUs of which associated count values are C+4 and C+5 wait to be submitted to the upper-layer communication layer until the submitting condition is met. Because before the PDU of which the associated count value is C is submitted, there are unreceived PDUs between PDUs of which associated count values are C, C+4, and C+5, that is, PDUs of which associated count values are C+1, C+2, and C+3, the timer is enabled to perform timing for the PDUs of which the associated count values are C+1, C+2, and C+3.

As shown in FIG. 7b, when the timer is enabled and before the timer expires, the PDCP layer receives PDUs of which associated count values are C+2 and C+3. In this case, a candidate count value of the RLC1 data stream is C+3, so that a currently submissible count value is C+3. C+2 meets the first condition, so that a PDU of which an associated count value is C+2 may be submitted to the upper-layer communication layer. C+3, C+4, and C+5 meet the second condition, so that PDUs of which associated count values are C+3, C+4, and C+5 may be submitted to the upper-layer communication layer. Because the submissible count value C+3 is greater than a minimum value C+1 of associated count values of PDUs for which timing is performed, it indicates that a PDU of which an associated count value is C+1 is lost. In this case, there is no PDU needing to wait, so that the timer is disabled.

As shown in FIG. 7c, when the timer is enabled and before the timer expires, the PDCP layer receives a PDU of which an associated count value is C+2. In this case, a candidate count value of the RLC1 data stream is C+2, so that a currently submissible count value is C+2. C+2 meets the second condition, and it indicates that a PDU of which an associated count value is C+1 is lost, so that a PDU of which an associated count value is C+2 may be submitted to the upper-layer communication layer without a need to wait for the PDU of which the associated count value is C+1. C+4 and C+5 meet neither the first condition nor the second condition, so that PDUs of which associated count values are C+4 and C+5 need to continue to wait. Because the submissible count value C+3 is greater than a minimum value C+1 of associated count values of PDUs for which timing is performed, and there are PDUs waiting at the moment, the timer is re-enabled to perform timing for a PDU of which an associated count value is C+3.

As shown in FIG. 7d, when the timer is enabled, the PDCP layer does not receive any PDU and the timer expires. After the timer expires, a candidate count value of each stream is determined. As can be seen from FIG. 5a, the candidate count value of the RLC1 data stream is C, and the candidate count value of the RLC2 data stream is C+5. A maximum value of associated count values of PDUs for which timing is performed is C+3 and is greater than the candidate count value C of the RLC1 data stream, so that the candidate count value of the RLC1 data stream is updated to be the maximum value of the associated count values of the PDUs for which timing is performed, that is, C+3. Because the candidate count value of the RLC2 data stream is C+5, which is already greater than C+3, updating is not performed. Then, a currently submissible count value is updated to be C+3. Because C+4 and C+5 meet the second condition, PDUs of which associated count values are C+4 and C+5 may be submitted to the upper-layer communication layer. In a case in which no PDU is received, a currently submissible count value is updated in advance, which can accelerate submission of PDUs that meet the condition to the upper-layer communication layer.

Preferably, after step S103, the method may further include the following step:
determining a data stream to which unreceived PDUs after the received PDUs belong, where associated count values of the unreceived PDUs and the associated count values of the received PDUs are consecutive.

Specifically, a PDU may carry an indication identifier, which is used to indicate the number of PDUs that are in a same data stream as the received PDUs and are consecutively received after the PDUs. For example, a PDU of which an associated count value is C is received from the RLC1 data stream, and an indication identifier carried by the PDU is 2. It indicates that PDUs of which associated count values are C+1 and C+2 are both received from the RLC1 data stream. By using the indication identifier, the data stream to which the foregoing unreceived PDUs belong may be determined.

In addition, before step S101, a splitting state report sent by a transmit end may further be received. The splitting state report includes a splitting rule. Therefore, according to the splitting rule, a data stream in which to-be-received PDUs are transmitted may be learned in advance. That is, the data stream to which the foregoing unreceived PDUs belong may be determined. It should be note that, when the method is executed by a user equipment, the transmit end is a base station. Correspondingly, when the method is executed by a base station, the transmit end is a user equipment.

When the unreceived PDUs and the received PDUs belong to a same data stream, it is determined whether the associated count values of the received PDUs previous to the unreceived PDUs are consecutive values starting from the currently submissible count value, and it is determined whether the associated count values of the unreceived PDUs are less than a candidate count value of the data stream to which the unreceived PDUs belong.

If the associated count values of the received PDUs previous to the unreceived PDUs are consecutive values starting from the currently submissible count value, and the associated count values of the unreceived PDUs are less than the candidate count value of the data stream to which the unreceived PDUs belong, it is determined that the unreceived PDUs are lost. At the PDCP layer, PDUs of which associated count values meet the submitting condition are submitted to the upper-layer communication layer of the PDCP layer, and PDUs of which associated count values do not meet the submitting condition wait.

By determining in advance the data stream to which the foregoing unreceived PDUs belong, whether the unreceived PDUs are lost or temporarily not received due to a delay may be determined in advance.

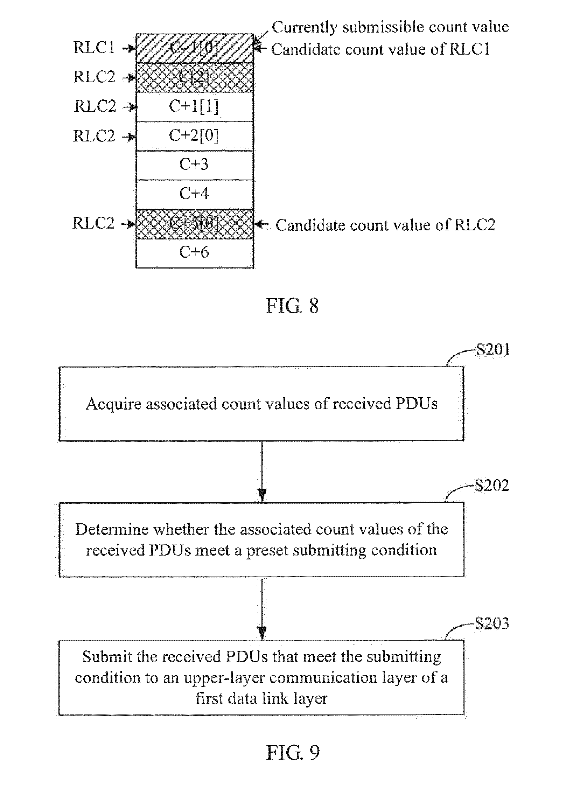

In a specific example, FIG. 8 is a schematic diagram of sorting of PDUs that carry indication identifiers at a PDCP layer according to Embodiment 1 of the present invention, where white boxes represent unreceived PDUs at a current moment; grid boxes represent received PDUs at the current moment; and slash boxes represent PDUs submitted to an upper-layer communication layer at the current moment. As shown in FIG. 8, at the current moment, a maximum value of associated count values of PDUs received from an RLC2 data stream is C+5, so that a submissible count value of the RLC2 data stream is updated to be C+5. The received PDUs do not include a PDU received from an RLC1 data stream, so that a candidate count value of the RLC1 data stream does not need to be updated and is still a previous candidate count value, that is, C-1. Therefore, a currently submissible count value is the smaller value of C-1 and C+5, that is, C-1. At the current moment, because C meets the second condition, a PDU of which an associated count value is C may be submitted. However, C+5 meets neither the first condition nor the second condition, and it indicates that PDUs of which associated count values are C+1, C+2, C+3, and C+4 may not arrive temporarily due to a transmission delay, so that a PDU of which an associated count value is C+5 needs to wait. However, an indication identifier carried by the PDU of which the associated count value is C is 2, and it indicates that unreceived PDUs of which associated count values are C+1 and C+2 are in a same data stream as the PDU of which the associated count value is C, that is, the RLC2 data stream. C and the currently submissible count value C-1 are consecutive, and C+1 and C+2 are less than the maximum value C+5 of the associated count values of the PDUs received from the RLC2 data stream. Therefore, it can be determined that the PDUs of which the associated count values are C+1 and C+2 are lost. C+5 waits to be submitted when the submitting condition is met.

It should be noted that, the foregoing solution in which the timer is enabled and the solution in which whether the unreceived PDUs are lost or temporarily not received due to a delay is determined in advance may be combined, to accelerate submission of PDUs by the first data link layer to the upper-layer communication layer.

It should be noted that, the first data link layer may also be an RLC layer. Correspondingly, the second data link layer may also be a data link layer that performs splitting below the RLC layer.

In a splitting solution, after receiving PDUs from multiple data streams at the second data link layer and by using the data transmission method provided in Embodiment 1 of the present invention, the first data link layer can avoid incorrectly determining temporarily unreceived PDUs as lost PDUs when submitting PDUs to the upper-layer communication layer.

FIG. 9 is a flowchart of a data transmission method according to Embodiment 2 of the present invention. The data transmission method is executed by a user equipment or a base station (which are collectively referred to as a receive end hereinafter).

As shown in FIG. 9, the data transmission method includes the following steps:
Step S201: Acquire associated count values of received PDUs.

The received PDUs are PDUs that a first data link layer receives from N data streams at a second data link layer, and N ≥ 2.

An example that the first data link layer is a PDCP layer and the second data link layer is an RLC layer is used for description. After the PDCP layer receives PDUs submitted by each data stream at the RLC layer, the receive end determines HFNs according to SNs. SNs carried by PDUs in different windows may be the same, but HFNs of PDUs in different windows are different. SNs carried by PDUs in a same window are not the same, but HFNs of PDUs in a same window are the same. Therefore, according to SNs carried by the received PDUs and HFNs determined according to the SNs, the receive end may acquire the associated count values of the PDUs. At the PDCP layer, the PDUs are sorted according to the associated count values.

Step S202: Determine whether the associated count values of the received PDUs meet a preset submitting condition.

The preset submitting condition is that the associated count values of the received PDUs and an associated count value of a PDU that is submitted finally are consecutive, and the associated count values of the received PDUs are less than the associated count value of the PDU that is submitted finally.

When the RLC layer is in a feedback mode and there are unreceived PDUs, the base station transmits the unreceived PDUs again. Therefore, in a case in which the RLC layer is in the feedback mode, a case in which PDUs are lost does not occur, and the RLC layer only needs to submit PDUs to an upper-layer communication layer, that is, the PDCP layer, in sequence. Therefore, when the received PDUs meet the submitting condition, step S203 is performed. If the received PDUs do not meet the submitting condition, the received PDUs wait until the submitting condition is met.

Step S203: Submit the received PDUs that meet the submitting condition to an upper-layer communication layer of a first data link layer.

It should be noted that, the user equipment or the base station decapsulates PDUs at the PDCP layer that can be submitted to the upper-layer communication layer, and submits the PDUs in an SDU form to the upper-layer communication layer. The communication layer may be a data link layer or a network protocol layer.

It should be noted that, the first data link layer may also be an RLC layer. Correspondingly, the second data link layer may also be a data link layer that performs splitting below the RLC layer.

By using the data transmission method provided in Embodiment 2 of the present invention, in a splitting solution, when an RLC layer is in a feedback mode, and after the first data link layer receives PDUs from multiple data streams at the second data link layer, a case in which disorder occurs can be avoided when the first data link layer submits PDUs to the upper-layer communication layer.

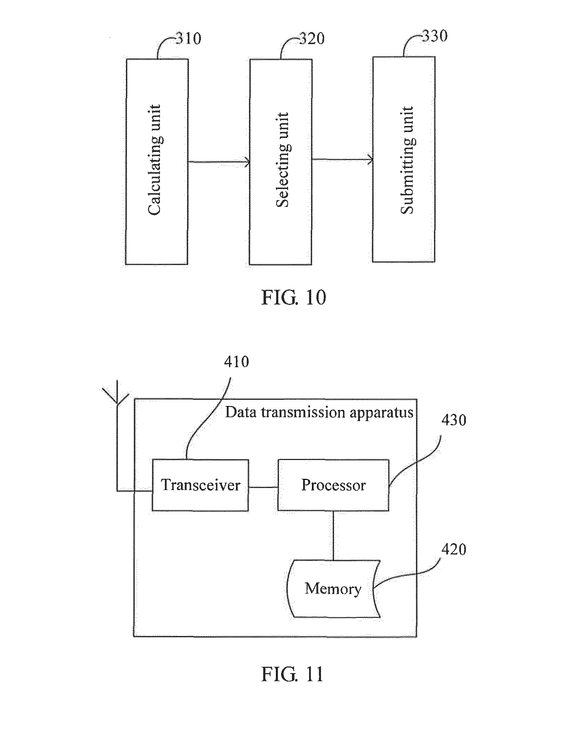

FIG. 10 is used as an example in the following to describe in detail a data transmission apparatus provided in Embodiment 3 of the present invention, and FIG. 10 is a schematic structural diagram of a data transmission apparatus according to Embodiment 3 of the present invention. The data transmission apparatus is applied to a user equipment or a base station, and is used to implement the data transmission method provided in Embodiment 1 of the present invention. As shown in FIG. 10, the data transmission apparatus includes an acquiring unit 310, a selecting unit 320, and a submitting unit 330.

The acquiring unit 310 is configured to acquire associated count values of received PDUs.

The received PDUs are PDUs that a first data link layer receives from N data streams at a second data link layer, and N ≥ 2.

An example that the first data link layer is a PDCP layer and the second data link layer is an RLC layer is used for description. Within a period of time, the PDCP layer receives multiple PDUs from the RLC layer and waits to submit the PDUs to an upper-layer communication layer of the PDCP layer. These received PDUs (not submitted to the upper-layer communication layer of the PDCP layer yet) are from different data streams. After the PDCP layer receives PDUs submitted by each data stream at the RLC layer, the acquiring unit 310 determines HFNs according to SNs. SNs carried by PDUs in different windows may be the same, but HFNs of PDUs in different windows are different. SNs carried by PDUs in a same window are not the same, but HFNs of PDUs in a same window are the same. Therefore, according to SNs carried by the received PDUs and HFNs determined according to the SNs, the acquiring unit 310 may acquire the associated count values of the received PDUs, to sort the PDUs at the PDCP layer according to the acquired associated count values.

The selecting unit 320 is configured to determine N candidate count values, and select a minimum value from the N candidate count values as a currently submissible count value.

The N candidate count values are in a one-to-one correspondence with the N data streams, and each candidate count value is a maximum value of associated count values of PDUs from each data stream and in the received PDUs.

Specifically, within a period of time, the PDCP layer receives multiple PDUs from the RLC layer and waits to submit the PDUs to the upper-layer communication layer of the PDCP layer. These received PDUs (not submitted to the upper-layer communication layer of the PDCP layer yet) are from different data streams. The selecting unit 320 is specifically configured to: after the received PDUs at the PDCP layer change, if the received PDUs include PDUs received from a data stream, update a candidate count value of the data stream to be a maximum value of associated count values of the PDUs received from the data stream, or, if the received PDUs do not include PDUs received from a data stream, skip updating a candidate count value of the data stream, and in this case, the candidate count value of the data stream is still a candidate count value of the data stream when the received PDUs at the PDCP layer do not change. Then, the selecting unit 320 is specifically configured to select a minimum value from these determined candidate count values as the currently submissible count value, to set a submitting condition by using the currently submissible count value.

The submitting unit 330 is configured to: when the associated count values of the received PDUs meet the submitting condition set according to the currently submissible count value, submit PDUs of which associated count values meet the submitting condition to the upper-layer communication layer of the first data link layer.

When the associated count values of the PDUs received by the first data link layer meet one of the following two conditions, the PDUs corresponding to the associated count values are submitted to the upper-layer communication layer of the PDCP layer. The first condition is that the associated count values of the received PDUs are less than the currently submissible count value, and the second condition is that the associated count values of the received PDUs are consecutive values starting from the currently submissible count value.

When the associated count values of the received PDUs meet the first condition and/or the second condition, it indicates that unreceived PDUs previous to the received PDUs are caused by a loss, and that waiting is not required. The submitting unit 330 is specifically configured to decapsulate PDUs at the PDCP layer that can be submitted to the upper-layer communication layer, and submit the PDUs in an SDU form to the upper-layer communication layer. The communication layer may be a data link layer or a network protocol layer. When the associated count values of the received PDUs meet neither of the foregoing two conditions, it indicates that the unreceived PDUs previous to the received PDUs may be caused by a transmission delay. The received PDUs cannot be submitted immediately and need to wait until the submitting condition is met, to avoid incorrectly determining that temporarily unreceived PDUs due to a transmission delay are lost and not waiting for the unreceived PDUs.

Preferably, the data transmission apparatus may further include a timing unit 350 and an updating unit 360.

The timing unit 350 is configured to enable a timer for unreceived PDUs between to-be-submitted PDUs and submitted PDUs. If still no PDU is received after the timer expires, it may be determined that PDUs for which timing is performed are not received due to a transmission loss.

The updating unit 360 is configured to: after the timer expires and when a maximum value of associated count values of unreceived PDUs (PDUs for which the timer is enabled) is greater than or equal to a candidate count value of any of the multiple data streams, update the candidate count value of the data stream to be the maximum value of the associated count values of the unreceived PDUs (the PDUs for which the timer is enabled), and then update the currently submissible count value.

Correspondingly, the submitting unit 330 is further configured to: after the currently submissible count value is updated, directly skip the foregoing unreceived PDUs, and submit PDUs at the PDCP layer, of which associated count values meet the submitting condition set according to the currently submissible count value, to the upper-layer communication layer of the PDCP layer in ascending order of the associated count values. By accelerating updating of the currently submissible count value, waiting time of PDUs that do not meet the current submitting condition is reduced.

Preferably, the data transmission apparatus may further include a first determining unit 370, a determining unit 380, and a second determining unit 390.

The first determining unit 370 is configured to determine a data stream to which unreceived PDUs after the received PDUs belong, where associated count values of the unreceived PDUs and the associated count values of the received PDUs are consecutive.

Preferably, the data transmission apparatus further includes a receiving unit 340, configured to receive a splitting state report sent by a transmit end. The splitting state report includes a splitting rule, so that the first determining unit 370 may learn in advance, according to the splitting rule, a data stream in which to-be-received PDUs are transmitted. That is, the data stream to which the unreceived PDUs after the received PDUs belong may be determined, where the associated count values of the unreceived PDUs and the associated count values of the received PDUs are consecutive. It should be note that, when the apparatus is applied to a user equipment, the transmit end is a base station. Correspondingly, when the apparatus is applied to a base station, the transmit end is a user equipment.

Preferably, a PDU may carry an indication identifier, which is used to indicate the number of PDUs that are in a same data stream as currently received PDUs and are consecutively received after the currently received PDUs. For example, a PDU of which an associated count value is C is received from an RLC1 data stream, and an indication identifier carried by the PDU is 2; it indicates that PDUs of which associated count values are C+1 and C+2 are received from the RLC1 data stream. Therefore, the first determining unit 370 determines, according to the indication identifier, the data stream to which the unreceived PDUs after the received PDUs belong, where the associated count values of the unreceived PDUs and the associated count values of the received PDUs are consecutive.

The determining unit 380 is configured to: when the unreceived PDUs and the previously received PDUs are in a same data stream, determine whether the associated count values of the received PDUs previous to the unreceived PDUs are consecutive values starting from the currently submissible count value, and determine whether the associated count values of the unreceived PDUs are less than a candidate count value of the data stream to which the unreceived PDUs belong.

The second determining unit 390 is configured to: if the associated count values of the received PDUs previous to the unreceived PDUs are consecutive values starting from the currently submissible count value, and the associated count values of the unreceived PDUs are less than the candidate count value of the data stream to which the unreceived PDUs belong, determine that the unreceived PDUs are lost.

It should be noted that, the data transmission apparatus may also include all of the timing unit 350, the updating unit 360, the first determining unit 370, the determining unit 380, the second determining unit 390, and the receiving unit 340, to accelerate submission of PDUs by the first data link layer to the upper-layer communication layer.

It should be noted that, the first data link layer may also be an RLC layer. Correspondingly, the second data link layer may also be a data link layer that performs splitting below the RLC layer.

After receiving PDUs from multiple data streams and by using the foregoing data transmission apparatus, the first data link layer can avoid incorrectly determining temporarily unreceived PDUs as lost PDUs when submitting PDUs to the upper-layer communication layer.

In hardware implementation, the foregoing receiving unit 350 may be a receiver or a transceiver. The foregoing other units except the receiving unit 350 may be in a hardware form and built in or independent of a processor of the data transmission apparatus, or may be stored in a software form in a memory of the data transmission apparatus, so that the processor can invoke and perform an operation corresponding to each of the foregoing modules. The processor may be a central processing unit (CPU), a microprocessor, a single-chip microcomputer, or the like.

As shown in FIG. 11, it is a schematic structural diagram of a data transmission apparatus according to Embodiment 4 of the present invention. The data transmission apparatus includes a transceiver 410, a memory 420, and a processor 430 that is separately connected to the transceiver 410 and the memory 420. Certainly, the data transmission apparatus may further include general components, such as an antenna, a baseband processing component, an intermediate radio frequency processing component, and an input and output apparatus, and this embodiment of the present invention sets no limitation herein.

The memory 420 stores a group of program code, and the processor 430 is configured to invoke the program code stored in the memory 420, to perform the following operations:
acquiring associated count values of received protocol data units PDUs, where the received PDUs are PDUs that a first data link layer receives from N data streams at a second data link layer, and N ≥ 2;
determining N candidate count values, where the N candidate count values are in a one-to-one correspondence with the N data streams, and each candidate count value is a maximum value of associated count values of PDUs from each data stream and in the received PDUs;
selecting a minimum value from the N candidate count values as a currently submissible count value; and
when the associated count values of the received PDUs meet a submitting condition set according to the currently submissible count value, submitting PDUs of which associated count values meet the submitting condition to an upper-layer communication layer of the first data link layer.

Further, that when the associated count values of the received PDUs meet a submitting condition set according to the currently submissible count value is specifically:
when the associated count values of the received PDUs meet one of the following two conditions: The associated count values of the received PDUs are less than the currently submissible count value, or the associated count values of the received PDUs are consecutive values starting from the currently submissible count value.

Further, the processor 430 invokes the program code in the memory 420, to perform the following operations:
enabling a timer for unreceived PDUs between to-be-submitted PDUs and submitted PDUs;
if a maximum value of associated count values of the unreceived PDUs is greater than or equal to a candidate count value of a first data stream after the timer expires, updating the candidate count value of the first data stream to be the maximum value of the associated count values of the unreceived PDUs, and updating the currently submissible count value, where the first data stream is any data stream of the N data streams; and
submitting PDUs of which associated count values meet the submitting condition to the upper-layer communication layer of the first data link layer.

Further, the processor 430 invokes the program code in the memory 420, to perform the following operations:
determining a data stream to which unreceived PDUs after the received PDUs belong, where associated count values of the unreceived PDUs and the associated count values of the received PDUs are consecutive;
when the unreceived PDUs and the previously received PDUs are in a same data stream, determining whether the associated count values of the received PDUs previous to the unreceived PDUs are consecutive values starting from the currently submissible count value, and determining whether the associated count values of the unreceived PDUs are less than a candidate count value of the data stream to which the unreceived PDUs belong; and
if the associated count values of the received PDUs previous to the unreceived PDUs are consecutive values starting from the currently submissible count value, and the associated count values of the unreceived PDUs are less than the candidate count value of the data stream to which the unreceived PDUs belong, determining that the unreceived PDUs are lost.

Further, the processor 430 invokes the program code in the memory 420, to perform the following operations:
receiving a splitting state report sent by a transmit end, where the splitting state report includes a splitting rule; and
the determining a data stream to which unreceived PDUs after the received PDUs belong, where associated count values of the unreceived PDUs and the associated count values of the received PDUs are consecutive is specifically:
   according to the splitting rule, determining the data stream to which the unreceived PDUs after the received PDUs belong, where the associated count values of the unreceived PDUs and the associated count values of the received PDUs are consecutive.

Further, the PDUs carry indication identifiers, where the indication identifiers are used to indicate the number of PDUs that are in a same data stream as currently received PDUs and are consecutively received after the currently received PDUs; and
the determining a data stream to which unreceived PDUs after the received PDUs belong, where associated count values of the unreceived PDUs and the associated count values of the received PDUs are consecutive is specifically:
according to the indication identifiers carried by the received PDUs, determining the data stream to which the unreceived PDUs after the received PDUs belong, where the associated count values of the unreceived PDUs and the associated count values of the received PDUs are consecutive.

It should be noted that, both the apparatus provided in Embodiment 3 and the apparatus provided in Embodiment 4 may be used to implement the method provided in Embodiment 1.

In a splitting solution, after receiving PDUs from multiple data streams at the second data link layer and by using the data transmission apparatus provided in Embodiment 4 of the present invention, the first data link layer can avoid incorrectly determining temporarily unreceived PDUs as lost PDUs when submitting PDUs to the upper-layer communication layer.

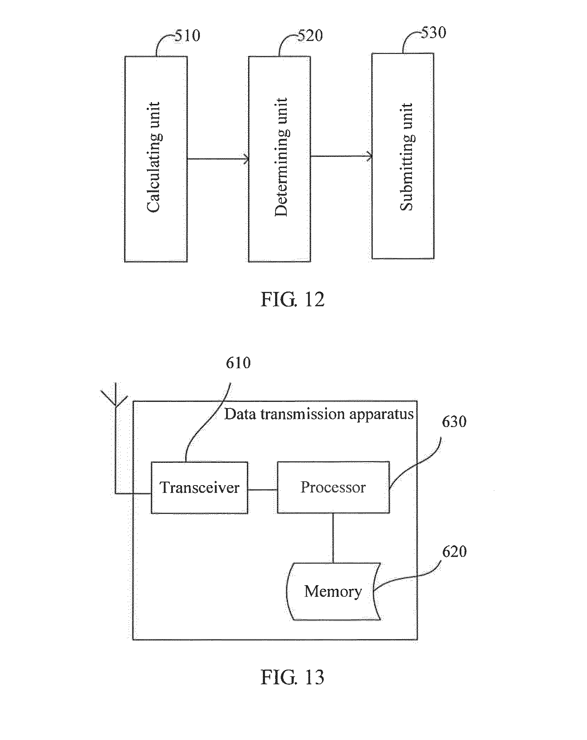

FIG. 12 is used as an example in the following to describe in detail a data transmission apparatus provided in Embodiment 5 of the present invention, and FIG. 12 is a schematic structural diagram of a data transmission apparatus according to Embodiment 5 of the present invention. The data transmission apparatus is applied to a user equipment or a base station, and in a case in which an RLC layer is in a feedback mode, the apparatus is used to implement the data transmission method provided in Embodiment 2 of the present invention. As shown in FIG. 12, the data transmission apparatus includes an acquiring unit 510, a determining unit 520, and a submitting unit 530.

The acquiring unit 510 is configured to acquire associated count values of received PDUs.

The received PDUs are PDUs that a first data link layer receives from N data streams at a second data link layer, and N ≥ 2.

An example that the first data link layer is a PDCP layer and the second data link layer is an RLC layer is used for description. After the PDCP layer receives PDUs sent by each data stream at the RLC layer, the acquiring unit 510 determines HFNs according to SNs. SNs carried by PDUs in different windows may be the same, but HFNs of PDUs in different windows are different. SNs carried by PDUs in a same window are not the same, but HFNs of PDUs in a same window are the same. Therefore, according to SNs carried by the received PDUs and HFNs determined according to the SNs, the acquiring unit 510 may acquire the associated count values of the received PDUs, to sort the PDUs at the PDCP layer according to the acquired associated count values.

The determining unit 520 is configured to determine whether the associated count values of the received PDUs meet a preset submitting condition.

The preset submitting condition is that the associated count values of the received PDUs and an associated count value of a PDU that is submitted finally are consecutive, and the associated count values of the received PDUs are less than the associated count value of the PDU that is submitted finally.

When the RLC layer is in a feedback mode and there are unreceived PDUs, the base station transmits the unreceived PDUs again. Therefore, in a case in which the RLC layer is in the feedback mode, a case in which PDUs are lost does not occur, and the RLC layer only needs to submit PDUs to an upper-layer communication layer of the PDCP layer in sequence. Therefore, when the received PDUs meet the submitting condition, the PDUs are submitted to an upper-layer data link layer of the PDCP layer. If the received PDUs do not meet the submitting condition, the received PDUs wait until the submitting condition is met.

The submitting unit 530 is configured to submit the received PDUs that meet the submitting condition to the upper-layer communication layer of the first data link layer.

It should be noted that, the submitting unit 530 decapsulates PDUs at the PDCP layer that can be submitted to the upper-layer communication layer, and submits the PDUs in an SDU form to the upper-layer communication layer. The communication layer may be a data link layer or a network protocol layer.

Preferably, the data transmission apparatus further includes a receiving unit 540, configured to receive a splitting state report sent by a transmit end. The splitting state report includes a splitting rule. A data stream in which to-be-received PDUs are transmitted may be learned in advance according to the splitting rule. It should be note that, when the apparatus is applied to a user equipment, the transmit end is a base station. Correspondingly, when the apparatus is applied to a base station, the transmit end is a user equipment.

It should be noted that, the first data link layer may also be an RLC layer. Correspondingly, the second data link layer may also be a data link layer that performs splitting below the RLC layer.

By using the data transmission apparatus provided in Embodiment 5 of the present invention, in a splitting solution, when an RLC layer is in a feedback mode, and after the first data link layer receives PDUs from multiple data streams at the second data link layer, a case in which disorder occurs can be avoided when the first data link layer submits PDUs to the upper-layer communication layer.

In hardware implementation, the foregoing receiving unit 540 may be a receiver or a transceiver. The foregoing other units except the receiving unit 540 may be in a hardware form and built in or independent of a processor of the data transmission apparatus, or may be stored in a software form in a memory of the data transmission apparatus, so that the processor can invoke and perform an operation corresponding to each of the foregoing modules. The processor may be a central processing unit (CPU), a microprocessor, a single-chip microcomputer, or the like.

As shown in FIG. 13, it is a schematic structural diagram of a data transmission apparatus according to Embodiment 6 of the present invention. The data transmission apparatus includes a transceiver 610, a memory 620, and a processor 630 that is separately connected to the transceiver 610 and the memory 620. Certainly, the data transmission apparatus may further include general components, such as an antenna, a baseband processing component, an intermediate radio frequency processing component, and an input and output apparatus, and this embodiment of the present invention sets no limitation herein.

The memory 620 stores a group of program code, and the processor 630 is configured to invoke the program code stored in the memory 620, to perform the following operations:
acquiring associated count values of received protocol data units PDUs, where the received PDUs are PDUs that a first data link layer receives from N data streams at a second data link layer, and N ≥ 2;
determining whether the associated count values of the received PDUs meet a preset submitting condition; and
submitting the received PDUs that meet the submitting condition to an upper-layer communication layer of the first data link layer.

Further, the submitting condition is specifically: The associated count values of the received PDUs and an associated count value of a PDU that is submitted finally are consecutive, and the associated count values of the received PDUs are less than the associated count value of the PDU that is submitted finally.

Further, the processor 630 invokes the program code in the memory 620, to perform the following operations:
receiving a splitting state report sent by a transmit end, where the splitting state report includes a splitting rule that is used to learn in advance, according to the splitting rule, a data stream to which to-be-received PDUs belong.

It should be noted that, both the apparatus provided in Embodiment 5 and the apparatus provided in Embodiment 6 may be used to implement the method provided in Embodiment 2.

By using the data transmission apparatus provided in Embodiment 6 of the present invention, in a splitting solution, when an RLC layer is in a feedback mode, and after the first data link layer receives PDUs from multiple data streams at the second data link layer, a case in which disorder occurs can be avoided when the first data link layer submits PDUs to the upper-layer communication layer.

A person skilled in the art may be further aware that, in combination with the examples described in the embodiments disclosed in this specification, units and algorithm steps may be implemented by electronic hardware, computer software, or a combination thereof. To clearly describe the interchangeability between the hardware and the software, the foregoing has generally described compositions and steps of each example according to functions. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

Steps of methods or algorithms described in the embodiments disclosed in this specification may be implemented by hardware, a software module executed by a processor, or a combination thereof. The software module may reside in a random access memory (RAM), a memory, a read-only memory (ROM), an electrically programmable ROM, an electrically erasable programmable ROM, a register, a hard disk, a removable disk, a CD-ROM, or any other form of storage medium known in the art.

In the foregoing specific implementation manners, the objective, technical solutions, and benefits of the present invention are further described in detail. It should be understood that the foregoing descriptions are merely specific implementation manners of the present invention, but are not intended to limit the protection scope of the present invention. Any modification, equivalent replacement, or improvement made without departing from the spirit and principle of the present invention should fall within the protection scope of the present invention.

## Claims

1. A data transmission method, wherein the method comprises:
acquiring associated count values of received protocol data units PDUs, wherein the received PDUs are PDUs that a first data link layer receives from N data streams at a second data link layer, and N ≥ 2;
determining N candidate count values, wherein the N candidate count values are in a one-to-one correspondence with the N data streams, and the candidate count value is a maximum value of associated count values of PDUs from each data stream and in the received PDUs;
selecting a minimum value from the N candidate count values as a currently submissible count value; and
when the associated count values of the received PDUs meet a submitting condition set according to the currently submissible count value, submitting PDUs of which associated count values meet the submitting condition to an upper-layer communication layer of the first data link layer.

2. The method according to claim 1, wherein that when the associated count values of the received PDUs meet a submitting condition set according to the currently submissible count value is specifically:
when the associated count values of the received PDUs meet one of the following two conditions: The associated count values of the received PDUs are less than the currently submissible count value, or the associated count values of the received PDUs are consecutive values starting from the currently submissible count value.

3. The method according to claim 1 or 2, wherein after the submitting PDUs of which associated count values meet the submitting condition to an upper-layer communication layer of the first data link layer, the method further comprises:
enabling a timer for unreceived PDUs between to-be-submitted PDUs and submitted PDUs;
if a maximum value of associated count values of the unreceived PDUs is greater than or equal to a candidate count value of a first data stream after the timer expires, updating the candidate count value of the first data stream to be the maximum value of the associated count values of the unreceived PDUs, and updating the currently submissible count value, wherein the first data stream is any data stream of the N data streams; and
submitting PDUs of which associated count values meet the submitting condition to the upper-layer communication layer of the first data link layer.

4. The method according to claim 1 or 2, wherein after the submitting PDUs of which associated count values meet the submitting condition to an upper-layer communication layer of the first data link layer, the method further comprises:
determining a data stream to which unreceived PDUs after the received PDUs belong, wherein associated count values of the unreceived PDUs and the associated count values of the received PDUs are consecutive;
when the unreceived PDUs and the previously received PDUs are belonged to a same data stream, determining whether the associated count values of the received PDUs previous to the unreceived PDUs are consecutive values starting from the currently submissible count value, and determining whether the associated count values of the unreceived PDUs are less than a candidate count value of the data stream to which the unreceived PDUs belong; and
if the associated count values of the received PDUs previous to the unreceived PDUs are consecutive values starting from the currently submissible count value, and the associated count values of the unreceived PDUs are less than the candidate count value of the data stream to which the unreceived PDUs belong, determining that the unreceived PDUs are lost.

5. The method according to claim 4, wherein before the acquiring associated count values of received protocol data units PDUs, the method further comprises:
receiving a splitting state report sent by a transmit end, wherein the splitting state report comprises a splitting rule; and
the determining a data stream to which unreceived PDUs after the received PDUs belong, wherein associated count values of the unreceived PDUs and the associated count values of the received PDUs are consecutive is specifically:
according to the splitting rule, determining the data stream to which the unreceived PDUs after the received PDUs belong, wherein the associated count values of the unreceived PDUs and the associated count values of the received PDUs are consecutive.

6. The method according to claim 4, wherein the PDUs carry indication identifiers, wherein the indication identifiers are used to indicate the number of PDUs that are in a same data stream as currently received PDUs and are consecutively received after the currently received PDUs; and
the determining a data stream to which unreceived PDUs after the received PDUs belong, wherein associated count values of the unreceived PDUs and the associated count values of the received PDUs are consecutive is specifically:
according to the indication identifiers carried by the received PDUs, determining the data stream to which the unreceived PDUs after the received PDUs belong, wherein the associated count values of the unreceived PDUs and the associated count values of the received PDUs are consecutive.

7. A data transmission apparatus, wherein the apparatus comprises:
an acquiring unit, configured to acquire associated count values of received protocol data units PDUs, wherein the received PDUs are PDUs that a first data link layer receives from N data streams at a second data link layer, and N ≥ 2;
a selecting unit, configured to determine N candidate count values, wherein the N candidate count values are in a one-to-one correspondence with the N data streams, and the candidate count value is a maximum value of associated count values of PDUs from each data stream and in the received PDUs; and select a minimum value from the N candidate count values as a currently submissible count value; and
a submitting unit, configured to: when the associated count values of the received PDUs meet a submitting condition set according to the currently submissible count value, submit PDUs of which associated count values meet the submitting condition to an upper-layer communication layer of the first data link layer.

8. The apparatus according to claim 7, wherein that when the associated count values of the received PDUs meet a submitting condition set according to the currently submissible count value is specifically:
when the associated count values of the received PDUs meet one of the following two conditions: The associated count values of the received PDUs are less than the currently submissible count value, or the associated count values of the received PDUs are consecutive values starting from the currently submissible count value.

9. The apparatus according to claim 7 or 8, wherein the apparatus further comprises:
a timing unit, configured to enable a timer for unreceived PDUs between to-be-submitted PDUs and submitted PDUs; and
an updating unit, configured to: if a maximum value of associated count values of the unreceived PDUs is greater than or equal to a candidate count value of a first data stream after the timer expires, update the candidate count value of the first data stream to be the maximum value of the associated count values of the unreceived PDUs, and update the currently submissible count value, wherein the first data stream is any data stream of the N data streams;
the submitting unit is further configured to: after the currently submissible count value is updated, submit PDUs of which associated count values meet the submitting condition to the upper-layer communication layer of the first data link layer.

10. The apparatus according to claim 7 or 8, wherein the apparatus further comprises:
a first determining unit, configured to determine a data stream to which unreceived PDUs after the received PDUs belong, wherein associated count values of the unreceived PDUs and the associated count values of the received PDUs are consecutive;
a determining unit, configured to: when the unreceived PDUs and the previously received PDUs are belonged to a same data stream, determine whether the associated count values of the received PDUs previous to the unreceived PDUs are consecutive values starting from the currently submissible count value, and determine whether the associated count values of the unreceived PDUs are less than a candidate count value of the data stream to which the unreceived PDUs belong; and
a second determining unit, configured to: if the associated count values of the received PDUs previous to the unreceived PDUs are consecutive values starting from the currently submissible count value, and the associated count values of the unreceived PDUs are less than the candidate count value of the data stream to which the unreceived PDUs belong, determine that the unreceived PDUs are lost.

11. The apparatus according to claim 10, wherein the apparatus further comprises:
a receiving unit, configured to receive a splitting state report sent by a transmit end, wherein the splitting state report comprises a splitting rule;
the first determining unit is specifically configured to: according to the splitting rule, determine the data stream to which the unreceived PDUs after the received PDUs belong, wherein the associated count values of the unreceived PDUs and the associated count values of the received PDUs are consecutive.

12. The apparatus according to claim 10, wherein the PDUs carry indication identifiers, wherein the indication identifiers are used to indicate the number of PDUs that are in a same data stream as currently received PDUs and are consecutively received after the currently received PDUs;
the first determining unit is specifically configured to: according to the indication identifiers carried by the received PDUs, determine the data stream to which the unreceived PDUs after the received PDUs belong, wherein the associated count values of the unreceived PDUs and the associated count values of the received PDUs are consecutive.

13. A data transmission apparatus, wherein the apparatus comprises:
a processor; and
a memory, wherein
the memory is configured to store program code, and the processor is configured to invoke the program code in the memory, to perform the following operations:
acquiring associated count values of received protocol data units PDUs, wherein the received PDUs are PDUs that a first data link layer receives from N data streams at a second data link layer, and N ≥ 2;
determining N candidate count values, wherein the N candidate count values are in a one-to-one correspondence with the N data streams, and the candidate count value is a maximum value of associated count values of PDUs from each data stream and in the received PDUs;
selecting a minimum value from the N candidate count values as a currently submissible count value; and
when the associated count values of the received PDUs meet a submitting condition set according to the currently submissible count value, submitting PDUs of which associated count values meet the submitting condition to an upper-layer communication layer of the first data link layer.

14. The apparatus according to claim 13, wherein that when the associated count values of the received PDUs meet a submitting condition set according to the currently submissible count value is specifically:
when the associated count values of the received PDUs meet one of the following two conditions: The associated count values of the received PDUs are less than the currently submissible count value, or the associated count values of the received PDUs are consecutive values starting from the currently submissible count value.

15. The apparatus according to claim 13 or 14, wherein the processor invokes the program code in the memory, to further perform the following operations:
enabling a timer for unreceived PDUs between to-be-submitted PDUs and submitted PDUs;
if a maximum value of associated count values of the unreceived PDUs is greater than or equal to a candidate count value of a first data stream after the timer expires, updating the candidate count value of the first data stream to be the maximum value of the associated count values of the unreceived PDUs, and updating the currently submissible count value, wherein the first data stream is any data stream of the N data streams; and
submitting PDUs of which associated count values meet the submitting condition to the upper-layer communication layer of the first data link layer.

16. The apparatus according to claim 13 or 14, wherein the processor invokes the program code in the memory, to further perform the following operations:
determining a data stream to which unreceived PDUs after the received PDUs belong, wherein associated count values of the unreceived PDUs and the associated count values of the received PDUs are consecutive;
when the unreceived PDUs and the previously received PDUs are belonged to a same data stream, determining whether the associated count values of the received PDUs previous to the unreceived PDUs are consecutive values starting from the currently submissible count value, and determining whether the associated count values of the unreceived PDUs are less than a candidate count value of the data stream to which the unreceived PDUs belong; and
if the associated count values of the received PDUs previous to the unreceived PDUs are consecutive values starting from the currently submissible count value, and the associated count values of the unreceived PDUs are less than the candidate count value of the data stream to which the unreceived PDUs belong, determining that the unreceived PDUs are lost.

17. The apparatus according to claim 16, wherein the processor invokes the program code in the memory, to further perform the following operations:
receiving a splitting state report sent by a transmit end, wherein the splitting state report comprises a splitting rule; and
the determining a data stream to which unreceived PDUs after the received PDUs belong, wherein associated count values of the unreceived PDUs and the associated count values of the received PDUs are consecutive is specifically:
according to the splitting rule, determining the data stream to which the unreceived PDUs after the received PDUs belong, wherein the associated count values of the unreceived PDUs and the associated count values of the received PDUs are consecutive.

18. The apparatus according to claim 16, wherein the PDUs carry indication identifiers, wherein the indication identifiers are used to indicate the number of PDUs that are in a same data stream as currently received PDUs and are consecutively received after the currently received PDUs; and
the determining a data stream to which unreceived PDUs after the received PDUs belong, wherein associated count values of the unreceived PDUs and the associated count values of the received PDUs are consecutive is specifically:
according to the indication identifiers carried by the received PDUs, determining the data stream to which the unreceived PDUs after the received PDUs belong, wherein the associated count values of the unreceived PDUs and the associated count values of the received PDUs are consecutive.
